**Europäisches Patentamt**

**European Patent Office**

**Office européen des brevets**

(19)

(11) Veröffentlichungsnummer: **0 198 503**
**B1**

# EUROPÄISCHE PATENTSCHRIFT

(12)

(45) Veröffentlichungstag der Patentschrift:
**01.06.88**

(21) Anmeldenummer: **86105355.1**

(22) Anmeldetag: **17.04.86**

(51) Int. Cl.⁴: **F 02 F 1/38**, F 02 F 1/36,
F 01 M 9/10

(54) Einzelzylinderkopf für eine Hubkolbenbrennkraftmaschine.

(30) Priorität: **17.04.85 DE 3513760**

(43) Veröffentlichungstag der Anmeldung:
**22.10.86 Patentblatt 86/43**

(45) Bekanntmachung des Hinweises auf die Patenterteilung:
**01.06.88 Patentblatt 88/22**

(84) Benannte Vertragsstaaten:
**DE FR GB IT NL**

(56) Entgegenhaltungen:
**DE - B - 1 250 191**
**DE - B - 2 514 044**
**GB - A - 2 049 807**
**US - A - 1 524 894**
**US - A - 2 248 664**
**US - A - 4 329 949**

(73) Patentinhaber: **Klöckner-Humboldt-Deutz**
**Aktiengesellschaft,**
**Deutz-Mülheimer-Strasse 111 Postfach 80 05 09,**
**D-5000 Köln 80 (DE)**

(72) Erfinder: **Bauer, Lothar, Am Hirschsprung 2,**
**D-5000 Köln 51 (DE)**
Erfinder: **Lenze, Heinz, Porzer Strasse 38,**
**D-5000 Köln 91 (DE)**
Erfinder: **Strusch, Wolfgang, Friedensstrasse 110,**
**D-5000 Köln 90 (DE)**

# Beschreibung

Die Erfindung bezieht sich auf eine Hubkolbenbrennkraftmaschine mit einer vom Zylinderkopfboden zur Deckplatte verlaufenden, im wesentlichen zylindrischen Aussenwand und einer in Richtung zum Zylinderkopfboden kugelförmig gewölbten Deckplatte, in der zentral eine von dieser zum Zylinderkopfboden verlaufende zylindrische Ventilführung angeordnet ist, deren nach oben offener Innenraum zur Aufnahme eines Einspritzventils dient.

Es ist aus der DE-A 2 514 044 ein Einzelzylinderkopf genannter Art bekannt geworden, bei dem eine zwischen dem Zylinderkopfboden und der Deckplatte kegelförmig verlaufende Zwischenwand angeordnet ist, die Kräfte vom Zylinderkopfboden her zu den Schraubenbutzen und damit zu den Zugankern überträgt. Die Aussenwand hat in Bezug auf die Zuganker- und Dichtkräfte eine elastische Ausbildung, und der Zylinderkopfboden ist dünnwandig und thermisch hoch belastbar ausgeführt. Im Gegensatz dazu hat der Zylinderkopf eine relativ dicke Deckplatte, um senkrechte Verformungen derselben durch die vom Zylinderkopf auf diese einwirkenden Kräfte möglichst weitgehend aufzufangen. Die Deckplatte ist an ihrer Oberseite im wesentlichen eben ausgebildet, so dass sich das im Ventilkipphebelraum sammelnde Öl je nach Anordnung der Ölablaufbohrung bei extremer Schräglage der Brennkraftmaschine in unerwünschter Weise anstauen kann.

Ferner ist aus der DE-B 1 250 191 ein Zylinderkopf für eine flüssigkeitsgekühlte Einspritzbrennkraftmaschine bekannt, der in üblicher Weise aus einem Zylinderkopfboden, einer Deckplatte sowie einer diese miteinander verbindenden Aussenwand besteht. Dabei ist die Deckplatte in Richtung zum Zylinderkopfboden kugelförmig gewölbt, um eine gute Abstützung des Zylinderkopfbodens nach oben zu gewähren. Als Stützelement zwischen der Deckplatte und dem Zylinderkopfboden dient eine zentral zwischen beiden angeordnete Ventilführung, in die ein Einspritzventil einsetzbar ist. Bohrungen oder Kanäle zur Ableitung des im Ventilkipphebelraum anfallenden Öls sind nicht ersichtlich.

Der Erfindung liegt die Aufgabe zugrunde, unter Vermeidung der geschilderten Nachteile einen Zylinderkopf der eingangs umrissenen Art dahingehend zu verbessern, dass bei jeder möglichen Schräglage der Brennkraftmaschine ein guter Ablauf durch eine Ablaufbohrung o. dergl. gewährleistet ist.

Die Aufgabe wird erfindungsgemäss dadurch gelöst, dass an der Kreuzung der Einspritzventilführung mit der Deckplatte, oberhalb einer zwischen Einspritzventil und Einspritzventilführung angeordneten Abdichtung, ein zwischen dem Einspritzventil und der Einspritzventilführung als Ölablauföffnung dienender Ringraum vorhanden ist, von dem zwei innerhalb der Deckplatte im wesentlichen horizontal und radial zu den beiden Seitenwänden des Zylinderkopfes verlaufende Ölablaufbohrungen abgehen, die Teilstücke einer Ölsammelleitung sind.

Durch diese Anordnung ist in Verbindung mit der kugelförmigen Wölbung der Deckplatte selbst bei grösserer Schräglage der Brennkraftmaschine dafür gesorgt, dass das von den Ventilkipphebeln zurücklaufende Öl ohne Rückstau abfliessen kann.

In Weiterbildung der Erfindung weist die Deckplatte eine zum Zylinderkopfzentrum hin abnehmende Wandstärke auf, wobei die Ölablaufbohrungen durch rippenförmige Verstärkungen an der Unterseite der Deckplatte zumindest teilweise hindurch verlaufen.

Schliesslich ist es für die Montage einfach, wenn die Ölablaufbohrungen benachbarter Zylinderköpfe durch besondere Doppelsteckstücke miteinander verbunden sind.

Ein Ausführungsbeispiel der Erfindung wird im folgenden anhand der Zeichnung näher beschrieben.

Es zeigt:

Fig. 1 einen zentralen Schnitt durch einen Zylinderkopf gemäss der Erfindung,

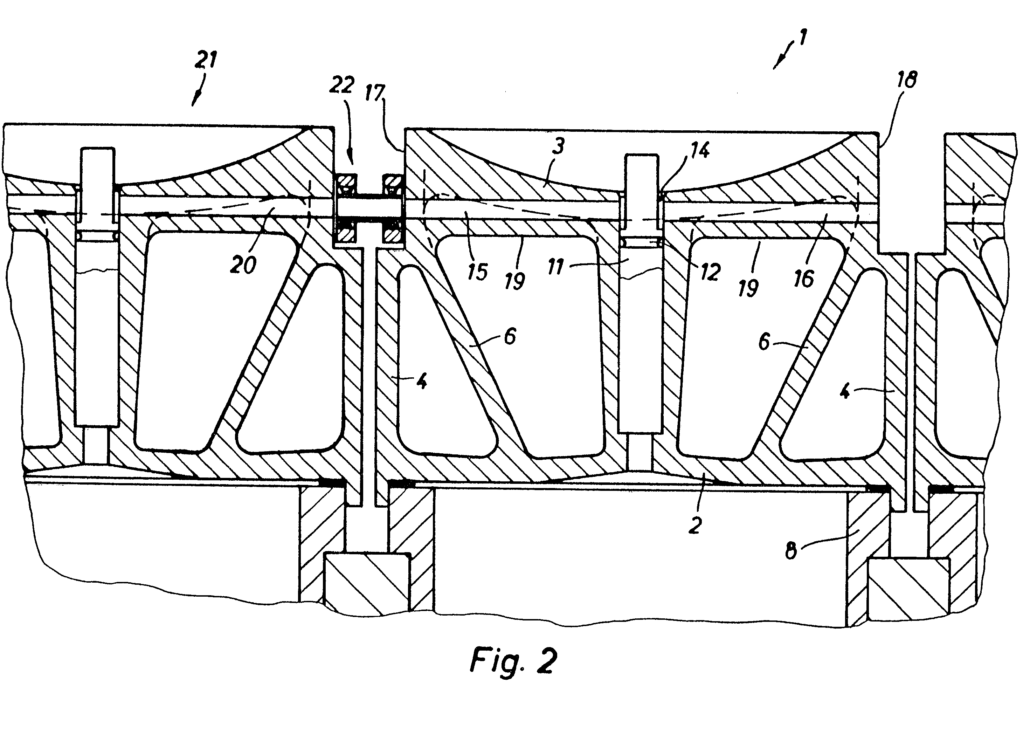

Fig. 2 einen Schnitt nach der Linie II-II in Fig. 1.

Der in den Figuren dargestellte Zylinderkopf 1 hat eine vom Zylinderkopfboden 2 zur Deckplatte 3 verlaufende zylindrische Aussenwand 4. Zwischen dem Zylinderkopfboden 2 und der Aussenwand 4 ist eine kegelförmig verlaufende Wand 6 vorgesehen. Zum Verspannen des Zylinderkopfes 1 mit einem Laufbuchsenbund 8 dienen nicht dargestellte Zuganker, die am Zylinderkopf 1 an Schraubenbutzen 5 angreifen. Der Zylinderkopfboden 2 ist im Übergangsbereich mit der kegelförmig verlaufenden Wand 6 verstärkt und verjüngt sich in Richtung auf die Zylinderkopfmitte und auf die Aussenwand 4.

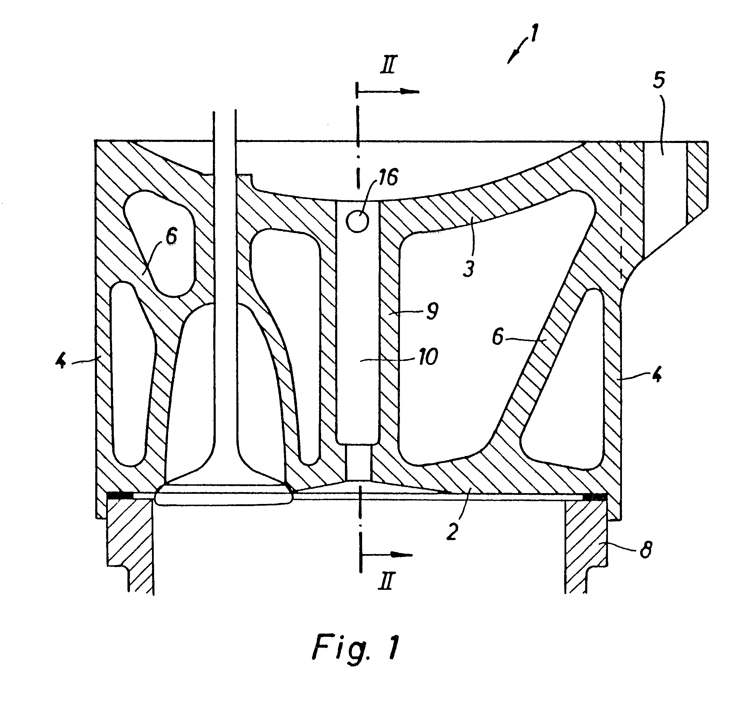

Die Deckplatte 3 ist gemäss Fig. 1 in Richtung zum Zylinderkopfboden 2 kugelförmig gewölbt. Zwischen dem Zylinderkopfboden 2 und der gewölbten Innenwand der Deckplatte 3 befindet sich zentral eine Pfeife 9, deren zylindrischer Innenraum 10 zur Aufnahme eines Einspritzventils 11 dient. Dabei ist das Einspritzventil 11 oberhalb einer radialen Dichtung 12 im Durchmesser abgesetzt, so dass in diesem Bereich zwischen dem Einspritzventil 11 und der Wand des Raumes 10 ein nach oben offener Ringraum 14 vorhanden ist. Von diesem Ringraum 14 führen gemäss Fig. 1 beiderseits radial Ölablaufbohrungen 15, 16 zu den beiden Stirnseiten 17 bzw. 18 des Zylinderkopfes 1. Im Verlauf der beiden Ölablaufbohrungen 15, 16 ist die Deckplatte 3 an ihrer Innenseite mit rippenförmigen Verstärkungen 19 versehen. Die Ölablaufbohrungen 15, 16 bilden mit den Ölablaufbohrungen benachbarter Zylinderköpfe eine Ölsammelleitung, die mit dem Ölsumpf in Verbindung steht. Als Verbindungselemente dieser Ölablaufleitungen 15, 16 mit entsprechenden Ölablaufleitungen 20 benachbarter Zylinderköpfe 21 dienen Doppelsteckverbindungen 22.

Durch die gewölbte Form der Deckplatte 3 kann diese trotz ihrer relativ dünnwandigen Ausgestaltung grosse Kräfte ohne unzulässige Verformungen aufnehmen. Ausserdem kann durch die Wölbung der Deckplatte 3 das an deren Oberseite im Ventilkipphebelraum anfallende Öl auch bei grosser Schräglage der Brennkraftmaschine stets vollständig durch die mittig in Form des Ringraumes 14 vorgesehene Ölablauföffnung und die anschliessenden Ölablaufbohrungen 15, 16 zum Ölsumpf abfliessen.

## Patentansprüche

1. Einzelzylinderkopf für eine Hubkolbenbrennkraftmaschine mit einer vom Zylinderkopfboden (2) zur Deckplatte (3) verlaufenden, im wesentlichen zylindrischen Aussenwand (4) und einer in Richtung zum Zylinderkopfboden (2) kugelförmig gewölbten Deckplatte (3), in der zentral eine von dieser zum Zylinderkopfboden (2) verlaufende zylindrische Ventilführung (9) angeordnet ist, deren nach oben offener Innenraum (10) zur Aufnahme eines Einspritzventils (11) dient, dadurch gekennzeichnet, dass an der Kreuzung der Einspritzventilführung (9) mit der Deckplatte (3), oberhalb einer zwischen Einspritzventil (11) und Einspritzventilführung (9) angeordneten Abdichtung (12), ein zwischen dem Einspritzventil und der Einspritzventilführung (9) als Ölablauföffnung dienender Ringraum (14) vorhanden ist, von dem zwei innerhalb der Deckplatte (3) im wesentlichen horizontal und radial zu den beiden Seitenwänden (17, 18) des Zylinderkopfes verlaufende Ölablaufbohrungen (15, 16) abgehen, die Teilstücke einer Ölsammelleitung sind.

2. Einzelzylinderkopf nach Anspruch 1, dadurch gekennzeichnet, dass die Deckplatte (3) eine zum Zylinderkopfzentrum hin abnehmende Wandstärke aufweist und dass die Ölablaufbohrungen (15, 16) durch rippenförmige Verstärkungen (19) an der Unterseite der Deckplatte (3) zumindest teilweise hindurch verlaufen.

3. Einzelzylinderkopf nach den Ansprüchen 1 und 2, dadurch gekennzeichnet, dass die Ölablaufbohrungen (15, 20) benachbarter Zylinderköpfe (1, 21) durch besondere Doppelsteckstücke (22) miteinander verbunden sind.

## Revendications

1. Culasse pour cylindre unique d'un moteur à combustion interne, avec une paroi extérieure (4) principalement cylindrique se développant depuis le fond de culasse (2) vers la plaque de recouvrement (3) et une plaque de recouvrement (3) de forme sphérique bombée en direction du fond de culasse (2), dans laquelle est disposé un guidage de soupape (9) cylindrique, centralement et se développant depuis celle-ci jusque dans un fond de culasse (2), dont l'enceinte intérieure (10) ouverte vers le haut sert à recevoir une soupape d'injection (11), caractérisée en ce qu'au croisement du guidage de soupape d'injection (9) avec la plaque de recouvrement (3), au-dessus d'une étanchéité (12) qui est située entre la soupape d'injection (11) et le guidage de soupape d'injection (9), il existe, entre la soupape d'injection et le guidage de soupape d'injection (9), une enceinte annulaire (14) servant d'ouverture d'évacuation d'huile, de laquelle partent deux alésages d'évacuation d'huile (15, 16), à l'intérieur de la plaque de recouvrement (3) et principalement horizontalement et radialement, vers les deux parois latérales (17, 18) de la culasse et qui sont des tronçons d'une conduite de collection d'huile.

2. Culasse pour cylindre unique selon la revendication 1, caractérisée en ce que la plaque de recouvrement (3) possède une épaisseur de paroi diminuant vers le centre de la culasse (15, 16) et que les alésages d'évacuation d'huile (15, 16) se développent au moins partiellement au côté inférieur de la plaque de recouvrement (3), à travers des renforcements (19) en forme de nervures.

3. Culasse pour cylindre unique selon les revendications 1 et 2, caractérisée en ce que les alésages d'évacuation d'huile (15, 20) de culasses voisines (1, 21) sont reliés ensemble par des pièces à double enfichage (22) particulières.

## Claims

1. Unit cylinder head for a reciprocating internal combustion engine with a largely cylindrical outer wall (4), running from the cylinder head bottom (2) to the cover plate (3), and a cover plate (3) being convex towards the cylinder head bottom (2), in which plate a cylindrical valve guide (9) is centrally located, running from this plate to the cylinder head bottom (2) and whose inner space (10) — being open at top — is designed to receive an injector (11), characterised in that at the point where the injector guide (9) crosses the cover plate (3) — above a seal (12) situated between injector (11) and injector guide (9) — there is an annulus (14) formed by the injector (11) and the injector guide (9), from which annulus two radial oil drainage holes (15, 16) branch off to the two side walls (17, 18) of the cylinder head, which holes are sections of an oil collecting line.

2. Unit cylinder head as per claim 1, characterised in that the cover plate (3) has a wall thickness decreasing towards the cylinder head centre and that the oil drainage holes (15, 16) run — at least partially — through rib-type reinforcements (19) on the lower side of the cover plate (3).

3. Unit cylinder head as per claims 1 and 2, characterised in that the oil drainage bores (15, 20) of adjoining cylinder heads (1, 21) are interconnected by special double plug-in elements (22).

Fig. 1

Fig. 2